# EUROPÄISCHE PATENTANMELDUNG

(11) **EP 0 732 483 A2**
(43) Veröffentlichungstag der Anmeldung: **18.09.1996**
(21) Anmeldenummer: 96100124.5
(22) Anmeldetag: 05.01.1996
(51) Int. Cl.: F01L 1/352, F01L 13/00

(54) **Koppelgetriebe**

(30) Priorität: 08.02.1995 DE 19504132; 08.06.1995 DE 19521004
(71) Anmelder: META MOTOREN- UND ENERGIE-TECHNIK GMBH, D-52134 Herzogenrath (DE)
(72) Erfinder: Kreuter, Peter, Dipl.-Ing., D-52072 Aachen (DE)
(74) Vertreter: Barske, Heiko, Dr. rer. nat.

(57) **Zusammenfassung**

Ein Koppelgetriebe zur Übertragung der Drehung einer Welle auf eine andere Welle, insbesondere für Nockenwellen einer Brennkraftmaschine, enthält ein mit der einen Welle drehfest verbundenes erstes Zahnrad 2, ein mit der anderen Welle drehfest verbundenes zweites Zahnrad 4, ein vom ersten Zahnrad angetriebenes drittes Zahnrad 6 und ein von dem dritten Zahnrad angetriebenes und das zweite Zahnrad antreibende viertes Zahnrad 8, wobei die Drehachsen der Zahnräder 1 und 3, 3 und 4 sowie 4 und 2 über Koppeln 10, 12, 14 miteinander verbunden sind und die Phase der Drehung der einen Welle relativ zur anderen Welle mittels einer Stelleinrichtung veränderbar ist, die ein Stellglied 16 zum Verstellen der Winkel zwischen den Koppeln betätigt. Die Stelleinrichtung enthält ein Reibglied 26, welches derart in Eingriff mit wenigstens einem der Räder bringbar ist, daß es die von der Stelleinrichtung herbeigeführte Verstellung des Stellgliedes unterstützt.

## Beschreibung

Die Erfindung betrifft ein Koppelgetriebe gemäß dem Oberbegriff des Anspruchs 1.

Solche Koppelgetriebe werden für unterschiedlichste Anwendungszwecke eingesetzt und sind beispielsweise in der Patentanmeldung P 42 44 550.7-13 beschrieben. Ein Anwendungsgebiet für solche Koppelgetriebe sind Vorrichtungen zur variablen Steuerung der Ventile von Brennkraftmaschinen, insbesondere zur drosselfreien Laststeuerung von Ottomotoren über die Einlaßhubfunktion eines oder mehrerer Einlaßventile pro Zylinder, wobei die Einlaßhubfunktion von zwei Nockenwellen bestimmt wird, deren Phasenlage veränderbar ist. Eine mit herkömmlichen Koppelgetrieben nur unzureichend erfüllbare Anforderung für den geschilderten Verwendungszweck besteht darin, daß die Phase der Nockenwellen innerhalb sehr kurzer Zeit um einen großen Betrag verändert werden muß.

Der Erfindung liegt die Aufgabe zugrunde, ein gattungsgemäßen Koppelgetriebe dahingehend weiter zu entwickeln, daß große Phasenänderungen innerhalb kurzer Zeitdauer bewerkstelligt werden können.

Diese Aufgabe wird mit den Merkmalen des Hauptanspruchs gelöst.

Mit dem erfindungsgemäß vorgesehenen Reibglied wird erreicht, daß an die Stelleinrichtung zur raschen Verstellung der Phasenlage geringere Anforderungen gestellt werden müssen. Die erforderliche äußere Kraft der Stelleinrichtung ist vermindert. Die von der Stelleinrichtung auf das Stellglied übertragene Bewegung wird durch den Eingriff des Reibgliedes mit wenigstens einem sich bewegenden Bauteil des Koppelgetriebes unterstützt, indem die in dem Bauteil enthaltene Bewegungsenergie in Art einer Servounterstützung, ausgelöst durch die Stelleinrichtung, zur Verstellung des Stellglieds genützt wird. Koppelgetriebe, für die die Erfindung anwendbar ist, können unterschiedlichen Aufbau haben; ihre Räder können in unmittelbarem gegenseitigen Eingriff sein; zwischen den Rädern können Zugmittel, wie Riemen, Kardantriebe usw. vorgesehen sein.

Der Eingriff des Reibgliedes mit vorteilhafterweise wenigstens einem der Räder kann in unterschiedlichster Weise erfolgen. Beispielsweise kann das Reibglied an eine entsprechende Reibfläche des Rades in axialer oder in radialer Richtung aufgedrückt werden. Die Stelleinrichtung kann unmittelbar manuell, pneumatisch, hydraulisch oder elektromotorisch betätigt sein.

Das erfindungsgemäße Koppelgetriebe eignet sich für unterschiedlichste Anwendungsfälle. Es ist überall dort besonders vorteilhaft einsetzbar, wo trotz geringer Energie- bzw. Leistungsaufnahme der Stelleinrichtung eine sichere und rasche Verstellung der gegenseitigen Phasenlage zweier mit gleicher Drehzahl drehender Wellen herbeigeführt werden soll.

Die Unteransprüche sind auf vorteilhafte Weiterbildungen des erfindungsgemäßen Koppelgetriebe gerichtet.

Die Erfindung wird im folgenden anhand eines vorteilhaften Ausführungsbeispiels mit weiteren Einzelheiten erläutert.

In der schematischen Zeichnung stellen dar:
- Fig. 1: eine Stirnansicht eines Koppelgetriebes,
- Fig. 2: eine Aufsicht auf das Koppelgetriebe der Fig. 1,
- Fig. 3: eine Aufsicht auf eine abgeänderte Ausführungsform eines Koppelgetriebes,
- Fig. 4: eine Stirnansicht einer weiteren Ausführungsform eines Koppelgetriebes,
- Fig. 5: eine Aufsicht auf das Koppelgetriebe gemäß Fig. 4,
- Fig. 6: eine Stirnansicht einer anderen Ausführungsform eines Koppelgetriebes,
- Fig. 7: eine Aufsicht auf das Koppelgetriebe nach Fig. 6 und

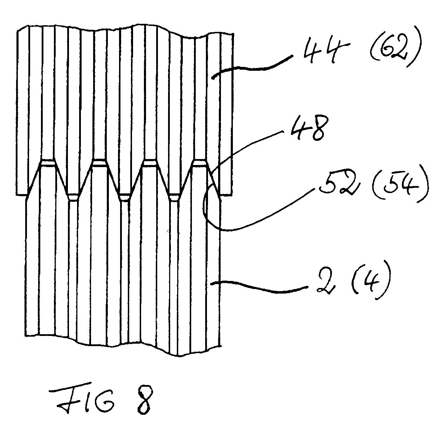

- Fig. 8: eine vorteilhafte Möglichkeit zur Ausbildung von Reibflächen.

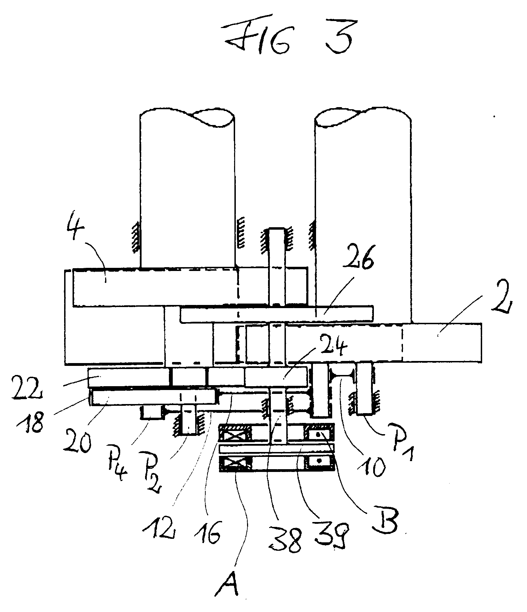

Ein erstes Zahnrad 2 ist drehfest mit einer nicht dargestellten ersten Nockenwelle verbunden, die ortsfest bzw. an einem Motorblock mit der Achse P1 gelagert ist. Ein zweites Zahnrad 4 ist mit einer weiteren, nicht dargestellten Nockenwelle eines Motors drehfest verbunden und mit der Achse P2 gelagert. Die beiden Zahnräder 2 und 4 sind, wie aus Fig. 2 ersichtlich, axial zueinander versetzt, so daß ihre Umfänge überlappen. Mit dem ersten Zahnrad 2 kämmt ein drittes Zahnrad 6, das wiederum mit einem vierten Zahnrad 8 kämmt, welches zugleich mit dem zweiten Zahnrad 4 kämmt. Die Zahnräder 6 und 8 sind an Koppeln gelagert, wobei eine erste Koppel 10 in P1 gelagert ist und in P3 das dritte Zahnrad 6 sowie eine zweite Koppel 12 lagert, die wiederum in P4 gelenkig mit einer dritten Koppel 14 verbunden ist, welche in P2 gelagert ist und in P4 das vierte Zahnrad 8 lagert. Die Zähnezahlen der Zahnräder 6 und 8 sind vorteilhafterweise unterschiedlich. Dennoch drehen das erste Zahnrad 2 und das zweite Zahnrad 4, wenn beide gleiche Zähnezahlen bzw. Durchmesser aufweisen, mit gleicher Drehzahl und entgegengesetzter Drehrichtung, wobei die Phasenlage zwischen den Drehungen der Zahnräder 2 und 4 in bekannter Weise durch Veränderung der Winkellage der Koppeln 10, 12, 14 veränderbar ist.

Zur Veränderung der Winkellage der Koppeln ist eine als Stellglied dienende Verbindungskoppel 16 vorgesehen, welche in P3 gelagert ist und in einer Lagerhülse 18 endet, die an einem Zapfen 20 gelagert ist, welcher exzentrisch an einem Stellzahnrad 22 ausgebildet ist, welches in P2 gelagert ist. Die exzentrisch zu P2 angeordnete Achse des Lagers 18, 20 ist mit P5 bezeichnet.

Eine Außenverzahnung des segmentförmig ausgebildeten Stellzahnrades 22 kämmt mit einem Ritzel 24, welches einteilig mit einem Übertragungszahnrad 26 ausgebildet ist, das um eine ortsfeste Achse P6 drehbar und axial verschiebbar gelagert ist. Eine Außenverzahnung des Übertragungszahnrades 26 kämmt mit einem Antriebsritzel 28 eines Elektromotors 30. Die Verzahnung zwischen dem Antriebsritzel 28 und dem Übertragungszahnrad 26 ist als Schrägverzahnung ausgebildet, so daß bei Drehmomentübertragung vom Antriebsritzel 28 auf das Übertragungszahnrad 26 je nach Antriebsrichtung eine axiale Verschiebung des Übertragungszahnrades 26 in der einen oder der anderen Richtung erfolgt.

Wie aus Fig. 2 ersichtlich, ist das Übertragungszahnrad 26 zwischen den Zahnrädern 2 und 4 angeordnet. Das Übertragungszahnrad 26 ist an seinen Stirnflächen mit Reibflächen 32 versehen, die mit je einer entsprechenden, am Zahnrad 2 und 4 ausgebildeten Reibfläche 34 bzw. 36 überlappen. Die Reibflächen bzw. Reibringflächen können beispielsweise dadurch ausgebildet sein, daß jede der genannten Stirnflächen der Zahnräder mit einem ringartigen Vorsprung ausgebildet ist, so daß die Reibflächen durch die Stirnflächen der Vorsprünge gebildet sind.

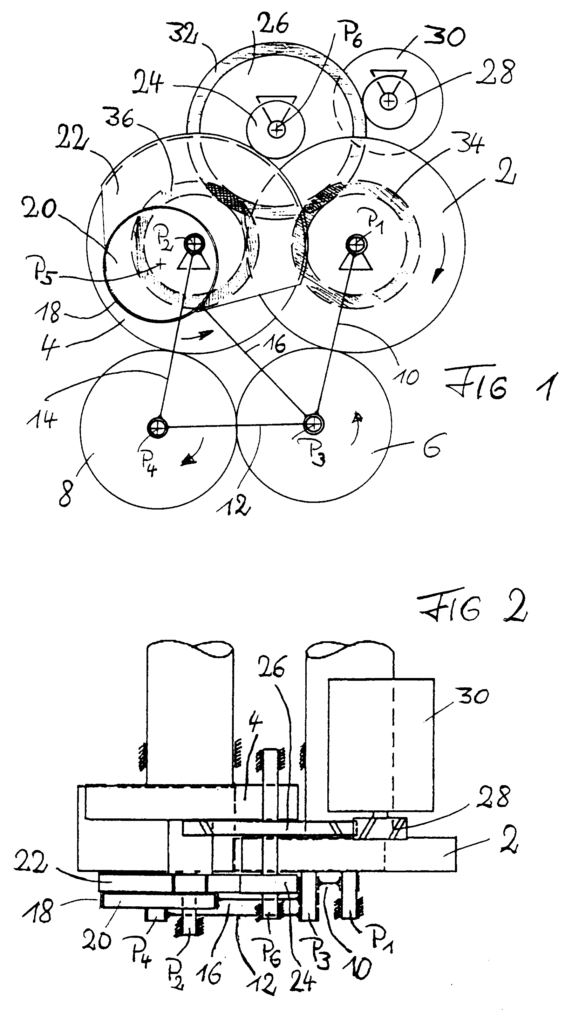

Für die folgende Funktionsbeschreibung sei angenommen, daß das erste Zahnrad 2 gemäß Fig. 1 in Uhrzeigerrichtung drehangetrieben ist, so daß das zweite Zahnrad 4 über das dritte Zahnrad 6 und das vierte Zahnrad 8 mit gleicher Drehgeschwindigkeit, aber entgegengesetzter Richtung drehangetrieben ist. Durch entsprechend große Ausbildung des Durchmessers des Zapfens 20 im Verhältnis zu dessen Exzentrizität wird erreicht, daß der Eingriff zwischen Verbindungskoppel 16 bzw. der Lagerhülse 18 mit dem Zapfen 20 für das Koppelgetriebe eine Selbsthemmung bildet, so daß sich das Koppelgetriebe infolge der Drehmomentübertragung vom ersten Zahnrad 2 auf das zweite Zahnrad 4 (oder umgekehrt) nicht selbstätig verstellt.

Sei nun angenommen, daß das Antriebsritzel 28 zur Verstellung des Koppelgetriebes in Uhrzeigerrichtung angetrieben wird, so daß sich das Übertragungszahnrad 26 in Gegenuhrzeigerrichtung dreht und dabei das Stellzahnrad 22 wiederum in Uhrzeigerrichtung dreht, so daß sich der Zapfen 20 zusammen mit der Verbindungskoppel 16 nach links bewegt und das Koppelgetriebe bzw. die Phase zwischen der Drehung der beiden Zahnräder 2 und 4 entsprechend verstellt wird. Bei der Drehmomentübertragung vom Antriebsritzel 28 auf das Übertragungszahnrad 26 wird dieses infolge der Schrägverzahnung in Richtung auf das erste Zahnrad 2 gedrückt, wodurch der Eingriff zwischen den Reibflächen 32 und 34 für einen zusätzlichen Drehantrieb des Übertragungszahnrades 26 in Gegenuhrzeigerrichtung sorgt, das heißt die Verstellung unterstützt. Sobald das Drehmoment vom Antriebsritzel 28 her aufhört, erfolgt keine weiter gegenseitige Anpressung der Reibflächen 32 und 34, da wegen der Selbsthemmung des Koppelgetriebes kein Drehmoment vom Übertragungszahnrad 26 her auf das Antriebsritzel 28 übertragen wird. Wird das Übertragungsritzel 28 in Gegenrichtung angetrieben, so wird das Übertragungszahnrad 26 mit seiner entsprechenden Reibfläche gegen die Reibfläche 36 des zweiten Zahnrades 4 gedrückt, so daß die Verstellung des Koppelgetriebes wiederum unterstützt wird.

Es versteht sich, daß die Übersetzung zwischen dem Antriebsritzel 28 und dem Stellzahnrad 22 vorteilhafterweise derart ausgelegt ist, daß eine große Winkeländerung am Antriebsritzel 28 eine kleine Winkeländerung am Stellzahnrad 22 hervorruft. Der Elektromotor 30 ist vorteilhafterweise so ausgelegt, daß er mit verhältnismäßig großem Drehmoment anfährt, das heißt bei einer Ansteuerung rasch losläuft. Das weitere Drehmoment braucht wegen der Servounterstützung nicht groß zu sein.

Die Zuordnung zwischen Stellung des Exzentertriebs 18, 20 und Phasenlage der Zahnräder 2 und 4 bzw. bei Anwendung in einem Nockentrieb ist vorteilhafterweise so, daß wenigstens eine der Extremstellungen einer erwünschten minimalen bzw. maximalen Phasenlage entspricht. Wenn der mit dem Koppelgetriebe ausgerüstete Nockentrieb beispielsweise zur drosselklappenfreien Laststeuerung einer Brennkraftmaschine dient, läßt sich auf diese Weise die maximale Füllung und damit auch die maximale Leistung sicher begrenzen.

Es versteht sich, daß zahlreiche Ergänzungen und/oder Abänderungen der beschriebenen Vorrichtung möglich sind. Beispielsweise kann das Übertragungszahnrad 26 mit seinem Ritzel 24 federnd in eine Mittellage vorgespannt sein, so daß gewährleistet ist, daß ohne Antriebsmoment vom Antriebsritzel 28 her kein Eingriff zwischen irgendwelchen Reibflächen vorhanden ist. Des weiteren kann die Schrägverzahnung zwischen Antriebsritzel 28 und Außenverzahnung des Übertragungszahnrades 26 auch als Geradverzahnung ausgeführt sein, wenn beispielsweise das Übertragungszahnrad 26 von einem doppelt wirkenden Hydraulikzylinder oder einem später beschriebenen Elektromagneten bei Antrieb des Elektromotors 30 in die eine oder andere Richtung axial bewegt wird. Die Reibflächen könnten auch als Radialflächen ausgebildet sein, wobei das Übertragungszahnrad 26 dann radial gegen diese Reibflächen bewegt werden würde.

Die Verbindungskoppel 16 könnte zur Verstellung des Koppelgetriebes auch unmittelbar linear angetrieben sein und mit einem Reibglied verbunden sein, welches bei einer Verstellung der Verbindungskoppel in Anlage an einen zweckentsprechenden Bereich der Stirnfläche beispielsweise des zweiten Zahnrades 4 gedrängt würde.

Es versteht sich, daß die beschriebene Ausführungsform des Koppelgetriebes auch dahingehend abgeändert werden kann, daß mit den Koppelrädern weitere Räder kämmen, von denen aus der Reibeingriff erfolgt. In Abänderung ist es auch möglich, die Selbsthemmung im Koppelgetriebe so auszulegen, daß das Koppelgetriebe wegen der Drehmomentübertragung vom ersten Zahnrad 2 auf das von ihm angetriebene zweite Zahnrad 4 die Tendenz hat, sich in einer Richtung selbst zu verstellen, so daß diese Verstellrichtung lediglich von einer Stelleinrichtung freigegeben werden muß, und eine Servowirkung durch Reibeingriff nur in der anderen Verstellrichtung notwendig ist.

In der beschriebenen Ausführungsform ist die aus Exzentertrieb 18, 20, Stellzahnrad 22, Übertragungszahnrad 26 und Elektromotor 30 bestehende Stelleinrichtung für die Verbindungskoppel 16 an ortsfesten Lagerstellen, beispielsweise unmittelbar an einer Brennkraftmaschine, gelagert. Wenn dies aus Bauraumgründen nicht möglich ist, kann die Stelleinrichtung alternativ auch an einer der Koppeln, beispielsweise der Koppel 12 angebracht werden, wobei das Übertragungszahnrad dann in P3 oder P4 gelagert werden kann.

Eine andere abgeänderte Ausführungsform besteht darin, daß das den Zapfen 20 tragende Bauteil nicht als Stellzahnrad sondern als Hebel ausgebildet ist, der in P₂ gelagert ist und der von einer Antriebseinrichtung, beispielsweise einem elektromotorischen Schneckentrieb, verdreht wird..

Die Ausführungsform des Koppelgetriebes gemäß Fig. 3 unterscheidet sich von der der Fig. 2 dahingehend, daß zur axialen Verschiebung des Übertragungszahnrades 26 für dessen Reibeingriff mit dem Zahnrad 2 oder 4 mit der Welle 38 des Übertragungszahnrades ein Anker 39 zusammenwirkt, der von zwei Elektromagneten A bzw. B in die eine oder die andere Richtung bewegt wird und dabei das Übertragungszahnrad axial mitnimmt. Die Verstellung des Koppelgetriebes erfolgt bei dieser Ausführungsform ausschließlich durch den Reibeingriff des Übertragungszahnrades 26, das mit dem Stellzahnrad 22 kämmt.

Die beschriebene Ausführungsform läßt sich in einfacher Weise mit einer Sicherheitsfunktion ergänzen, indem der Magnetantrieb mit einer nicht dargestellten am Anker 39 angreifenden Feder ergänzt wird, die durch einen weiteren Magneten im normalen Betriebszustand unwirksam gemacht wird und bei Aufheben eines Fehlers, beispielsweise Ausfall der Stromversorgung, den Anker 39 in eine Richtung zieht, in der das Übertragungszahnrad 26 derart in Eingriff mit einem der Zahnräder 2 oder 4 kommt, daß das Koppelgetriebe beispielsweise in Richtung einer Leistungsabnahme einer Brennkraftmaschine verstellt wird.

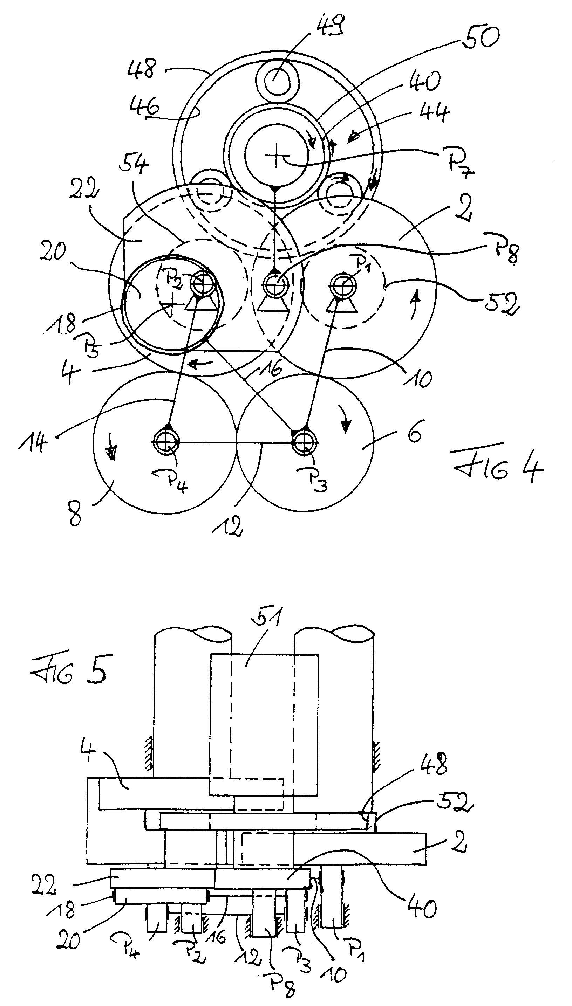

Bei der Ausführungsform des Koppelgetriebes gemäß Fig. 4 und 5 kämmt mit der außen am insgesamt segmentförmigen Stellzahnrad 22 ausgebildeten Verzahnung ein Antriebszahnrad 40. Dieses Antriebszahnrad 40 ist einteilig mit einem Reibrad 44 ausgebildet, das eine Innenverzahnung 46 und eine äußere Reibfläche 48 aufweist und die Drehachse P7 hat. Die Innenverzahnung 46 des Reibrades 44 kämmt mit Planetenrädern 49, die wiederum mit der Verzahnung des Ritzels 50 eines Elektromotors 51 kämmen, mittels dessen das Antriebszahnrad 40 in beiden Richtungen drehantreibbar ist.

Die Bauteile Elektromotor 51 mit Ritzel 50, Reibrad 44 und Planetenräder 49 bilden eine vormontierte Baugruppe, die insgesamt um die motorfeste Achse P8 schwenkbar gelagert ist.

Die Reibfläche 48 des Reibrades 44 befindet sich im Normalzustand der beschriebenen Vorrichtung annähernd in Eingriff mit bzw. Anlage an Reibflächen 52 bzw. 54, die an Umfangsflächen von Vorsprüngen der als Koppelräder dienenden Zahnräder 2 und 4 ausgebildet sind.

Die Funktion der beschriebenen Vorrichtung ist folgende:

Sei angenommen, daß sich die Koppelräder 2, 4, 6 und 8 in Richtung der eingetragenen Pfeile drehen, d. h. das Koppelrad 2 in Gegenuhrzeigerrichtung und das Koppelrad 4 in Uhrzeigerrichtung. Sei weiter angenommen, daß das Antriebszahnrad 40 mittels des Ritzels 50 über die Planetenräder 49 und das Reibrad 44 in Uhrzeigerrichtung drehangetrieben wird, um das Stellglied 22 in Gegenuhrzeigerrichtung zu verdrehen. Die Reaktionskraft zwischen Antriebszahnrad 40 und Stellglied 22 führt dann dazu, daß die gesamte Baugruppe 44, 49, 51 und 50 um die Achse P8 nach rechts verschwenkt, wodurch die Reibfläche 48 des Reibrades 44 in zunehmender Anlage an die Reibfläche 52 des Koppelrades 2 kommt, so daß die Umdrehung des Koppelrades 2 das Reibrad 44 zusätzlich antreibt und damit die Verstellung des Stellgliedes 22 unterstützt. Sobald der Drehantrieb des Ritzels 40 vom Motor 42 her aufhört, löst sich der Reibeingriff und das Stellglied 22 behält in Folge der Selbsthemmung zwischen dem Zapfen 20 und der Lagerhülse 18 seine Stellung bei. Bei einer Verstellung in Gegenrichtung wirken die genannten Bauteile in umgekehrter Richtung zusammen.

Es versteht sich, daß zahlreiche Abänderungen der beschriebenen Anordnung möglich sind. Beispielsweise könnte das Antriebszahnrad unmittelbar vom Elektromotor angetrieben werden, wodurch der aus Übersetzungsgründen vorteilhafte Planetentrieb entfallen könnte. Das Reibrad könnte auch getrennt vom Antriebszahnrad gelagert sein.

Vorteilhaft ist, das Stellzahnrad 22 gleichachsig mit P8 zu lagern, wodurch sich der Zahneingriff zwischen Stellzahnrad 22 und Ritzel 40 in keiner Weise ändert, wenn die Baugruppe aus Motor, Planetenrädern und Reibrad um die Achse P8 verschwenkt. Da die Schwenkbewegungen jedoch sehr klein sind, bleibt auch bei der beschriebenen Konstruktion ein einwandfreier Zahneingriff erhalten.

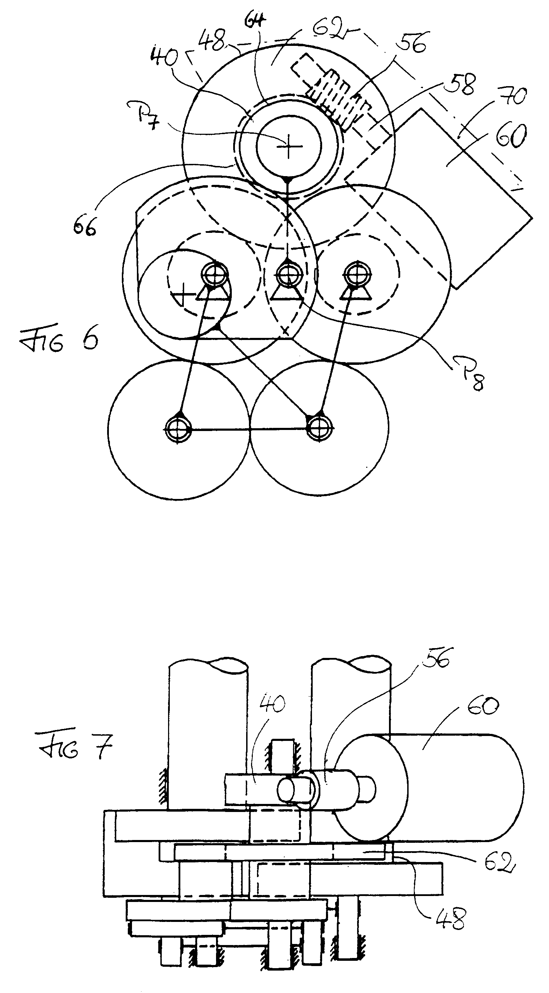

Die in Fig. 6 und 7 dargestellte Ausführungsform des erfindungsgemäßen Koppelgetriebes ist gegenüber der Fig. 4 und 5 lediglich bezüglich des Antriebs des Antriebszahnrades 40 abgeändert. Mit Ausnahme des Antriebszahnrades 40 sind entsprechend nur diejenigen Bezugszeichen eingefügt, die gegenüber der Ausführungsform gemäß Fig. 4 und 5 geänderte Bauteile bezeichnen. Die Außenverzahnung des Antriebszahnrades 40 kämmt mit einer Schnecke 56, die an der Antriebswelle 58 des Elektromotors 60 angebracht ist. Das mit dem Antriebszahnrad 40 drehfest verbundene Reibrad 62 weist bei dieser Ausführungsform keine Innenverzahnung auf, sondern ist lediglich an seiner Außenfläche mit der Reibfläche 48 ausgebildet. Am Antriebszahnrad 40 sind axial versetzt zwei Verzahnungen ausgebildet, von denen eine Verzahnung 64 mit der Schnecke 56 kämmt und die andere Verzahnung 66 wie bei der Ausführungsform gemäß Fig. 4 mit dem Stellglied 22 kämmt. Die Untersetzung zwischen Elektromotor und Antriebszahnrad, die bei der Ausführungsform gemäß Fig. 4 über die Planetenräder erfolgt, erfolgt bei der Ausführungsform gemäß Fig. 6 über die Schnecke 56.

In Fig. 6 strichpunktiert angedeutet ist eine gemeinsame Grundplatte 70, auf der das Antriebszahnrad 40 mit dem mit ihm drehfest verbundenen und um die gemeinsame Drehachse P7 drehbaren Reibrad 62 sowie gegebenenfalls der Elektromotor 60 mit Schnecke 56 derart montiert sind, daß die gesamte Baugruppe um die Schwenkachse P8 schwenkbar ist. Der Elektromotor könnte auch an einem anderen zum Koppelgetriebe gehörenden Bauteil befestigt sein, d.h. die kleine Bewegung der Grundplatte nicht mitmachen.

Fig. 7 zeigt eine vorteilhafte Ausbildung der Reibflächen am Umfangsrand des Reibrades 44 bzw. 62 und der Koppelräder 2 bzw. 4, wobei die Reibflächen in Umfangsrichtung, d.h. senkrecht zu den Drehachsen der zugehörigen Räder gesehen sind. Durch die Ausbildung der Reibflächen als Vielkeilflächen (stark vergrößerte Darstellung) wird ein weicherer und gleichzeitig erheblich verbesserter Reibeingriff erreicht.

## Patentansprüche

1. Koppelgetriebe zur Übertragung der Drehung einer Welle auf eine andere Welle, insbesondere für Nockenwellen einer Brennkraftmaschine, mit einem mit der einen Welle drehfest verbundenen ersten Koppelrad (2), einem mit der anderen Welle drehfest verbundenen zweiten Koppelrad (4), einem vom ersten Koppelrad angetriebenen dritten Koppelrad (6) und einem von dem dritten Koppelrad angetriebenen und das zweite Koppelrad antreibenden vierten Koppelrad (8), wobei die Drehachsen der Koppelräder eins und drei, drei und vier sowie vier und zwei über Koppeln (10, 12, 14) miteinander verbunden sind und die Phase der Drehung der einen Welle relativ zur anderen Welle mittels einer Stelleinrichtung (22, 26, 28, 30) veränderbar ist, welche ein Stellglied (16) zum Verstellen der Winkel zwischen den Koppeln betätigt,
dadurch gekennzeichnet, daß
die Stelleinrichtung (22, 26, 28, 30) ein Reibglied (26) enthält, welches derart in Reibeingriff mit wenigstens einem sich bewegenden Bauteil (2, 4) des Koppelgetriebes bringbar ist, daß es die von der Stelleinrichtung herbeigeführte Verstellung des Stellgliedes (16) unterstützt.

2. Koppelgetriebe nach Anspruch 1,
dadurch gekennzeichnet, daß
die Koppelräder Zahnräder (2, 4, 6, 8) sind und das Reibglied (26) wahlweise in Reibeingriff mit einem von zwei gegensinnig drehenden Zahnrädern (2,4) bringbar ist.

3. Koppelgetriebe nach Anspruch 2,
dadurch gekennzeichnet, daß
zum Bewegen des Reibgliedes (26) in einen Reibeingriff ein Elektromagnet (42, 44) vorgesehen ist,

4. Koppelgetriebe nach Anspruch 2,
dadurch gekennzeichnet, daß
das Reibglied als ein axial verschiebbar gelagertes Übertragungszahnrad (26) ausgebildet ist, welches mit einem Stellmotor (30) über eine Schrägverzahnung verbunden ist und an seinen beiden Seitenflächen mit Reibflächen (32) versehen ist, welche bei einer axialen Verschiebung des Übertragungszahnrades mit jeweils einer Reibfläche (34, 36) an einer Seitenfläche eines der gegensinnig drehenden Koppelräder (2, 4) in Eingriff bringbar ist.

5. Koppelgetriebe nach Anspruch 4,
dadurch gekennzeichnet, daß
das Übertragungszahnrad (26) mit dem ersten oder dem zweiten Tahnrad (2, 4) in Reibeingriff brungbar ist.

6. Koppelgetriebe nach Anspruch 4 oder 5,
dadurch gekennzeichnet, daß
das Übertragungszahnrad (26) in drehfestem Eingriff mit einem Stellzahnrad (22) ist, welches einen Exzenter (20) aufweist, an dem zur Verstellung der Koppeln (10, 12, 14) eine Verbindungskoppel (16) gelagert ist.

7. Koppelgetriebe nach Anspruch 6,
dadurch gekennzeichnet, daß
das Stellzahnrad (22) gleichachsig mit ersten oder zweiten Koppelrad (2 oder 4) gelagert ist und daß die Verbindungskoppel (16) an der Achse des Zahnrades vier oder drei (6 oder 8) eingreift.

8. Koppelgetriebe nach Anspruch 6 oder 7,
dadurch gekennzeichnet, daß
eine Außenverzahnung des Übertragungszahnrades (26) mit einem Antriebsritzel (28) des Stellmotors (30) kämmt und drehfest mit dem Übertragungszahnrad verbunden eine weitere Verzahnung vorgesehen ist, die mit einer Außenverzahnung des segmentförmig ausgebildeten Stellzahnrades (22) kämmt, wobei die Verzahnungen derart ausgebildet sind, daß ein großer Verdrehungswinkel des Antriebsritzels (28) einem kleinen Drehwinkel des Stellzahnrades (22) entspricht.

9. Koppelgetriebe nach einem der Ansprüche Ansprüche 1 bis 8,
dadurch gekennzeichnet, daß
das Koppelgetriebe bezüglich seiner Eigenverstellung bei nicht betätigter Stelleinrichtung selbsthemmend ist.

10. Koppelgetriebe nach Anspruch 9 und einem der Ansprüche 6 bis 8,
dadurch gekennzeichnet, daß
die Selbsthemmung durch zweckentsprechende Auslegung des Exzentertriebes (18, 20) der Verbindungskoppel (16) erfolgt.

11. Koppelgetriebe nach Anspruch 10,
dadurch gerkennzeichnet, daß
der Exzentertrieb durch einen am Segmentzahnrad (22) exzentrisch angebrachten Zapfen (20) sowie eine auf diesem gelagerte, mit der Verbindungskoppel (16) verbundene Lagerhülse (18) gebildet ist, wobei der Lagerdurchmesser der Lagerhülse größer ist als der Abstand zwischen der Hülsenachse (P₄) und der Achse (P₂) des Segmentzahnrades.

12. Koppelgetriebe nach einem der Ansprüche 6 bis 11,
dadurch gekennzeichnet, daß
eine Extremstellung des Exzentertriebes (18, 20) einem erwünschten Extrem der Phasenlage entspricht.

13. Koppelgetriebe nach einem der Ansprüche 1 bis 12,
dadurch gekennzeichnet, daß
das Reibglied (26) federnd in eine Mittellage gedrängt ist.

14. Koppelgetriebe nach Anspruch 1,
dadurch gekennzeichnet, daß
das Reibglied an einer der Koppeln (10, 12, 14) angebracht ist.

15. Koppelgetriebe nach einem der Ansprüche 1 bis 14,
dadurch gekennzeichnet, daß
eine Einrichtung vorgesehen ist, welche das Koppelgetriebe bei Fehlerzuständen in eine Stellung bringt, in der die Phase zwischen den Drehungen beider Wellen einen vorbestimmten Wert annimmt.

16. Koppelgetriebe nach Anspruch 1,
dadurch gekennzeichnet, daß
die Stelleinrichtung eine Antriebsbaugruppe mit einem in zwei Richtungen drehantreibbaren Antriebszahnrad (40) aufweist, welches mit einer am Stellglied (22) ausgebildeten Verzahnung kämmt,
welche Antriebsbaugruppe insgesamt exzentrisch zur Ritzelachse schwenkbar gelagert ist und als Reibglied ein Reibrad (44; 62) aufweist, durch dessen Drehung die Drehung des Antriebszahnrades unterstützbar ist,
wobei die Antriebsbaugruppe bei einem Drehantrieb des Antriebszahnrades durch die Reaktionskraft am Stellglied derart um ihre exzentrische Schwenkachse (P8) schwenkt, daß das Reibrad zur Unterstützung der Verstellung des Stellgliedes in Reibeingriff mit einem von zwei sich gegensinnig drehenden Koppelrädern (2, 4) kommt.

17. Koppelgetriebe nach Anspruch 16,
dadurch gekennzeichnet, daß
die exzentrische Schwenkachse (P8) der Antriebsbaugruppe symmetrisch zu den Drehachsen (P1, P2) der beiden die Verstellung unterstützenden, gegensinnig drehenden Koppelräder (2, 4) angeordnet sind.

18. Koppelgetriebe nach Anspruch 16 oder 17,
dadurch gekennzeichnet, daß
das Stellglied ein Zahnrad (22) ist, welches gleichachsig mit der Schwenkachse (P8) der Antriebsbaugruppe gelagert ist.

19. Koppelgetriebe nach einem der Ansprüche 16 bis 18,
dadurch gekennzeichnet, daß
die Reibfläche (48) des Reibrades (44; 62) und die Reibflächen (52, 54) der Koppelräder (2, 4) als Vielkeilflächen ausgebildet sind.

20. Koppelgetriebe nach einem der Ansprüche 16 bis 19,
dadurch gekennzeichnet, daß
das Antriebszahnrad (40) gleichachsig mit dem an einer äußeren Umfangsfläche mit der Reibfläche (48) versehenen Reibrad (44) gelagert und drehfest mit ihm verbunden ist.

21. Koppelgetriebe nach Anspruch 20,
dadurch gekennzeichnet, daß
die Antriebsbaugruppe einen Elektromotor (51) enthält, dessen Ritzel (50) über Planetenräder (49) das Reibrad (44) über eine an diesem ausgebildete Innenverzahnung antreibt.

22. Koppelgetriebe nach Anspruch 20,
dadurch gekennzeichnet, daß
die Antriebsbaugruppe einen Elektromotor (60) enthält, der das Antriebszahnrad über eine Schnecke (56) antreibt.
